# EUROPÄISCHE PATENTSCHRIFT

(11) **EP 0 945 613 B1**
(45) Veröffentlichungstag und Bekanntmachung des Hinweises auf die Patenterteilung: **04.09.2002**
(21) Anmeldenummer: 99104855.4
(22) Anmeldetag: 11.03.1999
(51) Int. Cl.: F03D 7/02, F03D 11/00, F16C 19/52, F16C 25/06

(54) **Anordnung zur drehbaren Lagerung der Maschinengondel einer Windkraftanlage**
Bearing arrangement for a wind turbine nacelle
Support de nacelle d'éolienne

(30) Priorität: 26.03.1998 DE 19814629
(43) Veröffentlichungstag der Anmeldung: 29.09.1999
(73) Patentinhaber: Tacke Windenergie GmbH, 48499 Salzbergen (DE)
(72) Erfinder: Partmann, Norbert, Dr., 48527 Nordhorn (DE); Thoren, Ten Rolf, 49074 Osnabrück (DE)
(74) Vertreter: Hilleringmann, Jochen, Dipl.-Ing.

(56) Entgegenhaltungen:
- DE-A- 3 725 972
- DE-B- 1 182 931
- US-A- 5 232 072

## Beschreibung

Die Erfindung betrifft eine Anordnung zur drehbaren Lagerung der Maschinengondel einer Windkraftanlage gemäß dem Oberbegriff des Anspruchs 1. Eine solche Anordnung wird auch als "Azimutsystem" bezeichnet.

Windkraftanlagen, bei denen die Drehachse des Rotors im wesentlichen horizontal liegt (Horizontalrotor-Typ), haben eine auf einem Turm gelagerte Maschinengondel. In dieser um eine vertikale Achse drehbaren Maschinengondel ist die Rotornabe um eine im wesentlichen horizontale Achse drehbar gelagert, hat aber vorzugsweise eine fest vorgegebene Winkellage zur Grundplatte der Gondel um die vertikale Achse.

Beim Betrieb von Windkraftanlagen werden bekanntermaßen durch die auf die Rotorblätter einwirkenden Windkräfte (Turbulenzen) hohe turbulenzbedingte Drehmomente um die Turmachse (vertikale Achse) erzeugt. Diese bewirken tendentiell eine Verdrehung der Maschinengondel um die Turmachse. Andererseits soll die Maschinengondel im Rahmen der Betriebsführung der Anlage durch einen entsprechenden Antrieb in vorbestimmte Winkellagen um die Vertikale gebracht und dort - ggfs. auch gegen ein durch den Wind erzeugtes Drehmoment - festgehalten werden können.

Die Gondellagerung ist üblicherweise als Kugeldrehverbindung ("Kugellager") zwischen einem verzahnten turmfesten Lagerring und einem Lagerring an der Grundplatte des Machinenträgers ausgeführt. Auf dem Maschinenträger sind mehrere Antriebsmotoren mit Untersetzungsgetriebe feststehend montiert, die jeweils über ein Antriebswellenritzel mit der Verzahnung des turmfesten Lagerrings im Eingriff stehen.

Bei bekannten Windkraftaulagen werden die turbulenzbedingten Momente um die Turmachse entweder durch (zumeist hydraulische) Bremsen aufgenommen, oder es werden Reiblager eingesetzt, die ein ausreichend hohes Reibmoment erzeugen, um die im Normalbetrieb auftretenden Lasten aufzunehmen. Beide Arten von Anlagen weisen in der Regel Antriebsmotoren auf, bei denen eine zusätzliche Bremse vorgesehen ist, um eventuell auftretende Extremlasten antriebsseitig abzufangen.

Im praktischen Betrieb von Windkraftanlagen der erstgenannten Bauart hat es sich als nötig erwiesen, die aktiven Bremsen auch bei relativ geringen Windstärken und Windlasten und somit praktisch ständig in Betrieb halten zu müssen. Dies hat einen hohen Bremsenverschleiß zur Folge und wirkt sich nachteilig auf die Stabilität der Anlagensteuerung insgesamt und natürlich auf die Wartungshäufigkeit und auch den effektiven Energieverbrauch aus.

Aus US-A-5,323,072 und DE-A-37 25 972 sind Kugeldrehverbindungen mit zwei Lagerringen beschrieben, wobei der eine Lagerring mehrere gegen den anderen Lagerring vorspannbare Reibelemente aufweist, die gegen ein in den anderen Lagerring eingesetztes Gleitelement drücken und somit eine Bremskraft aufbringen.

Der Erfindung liegt deshalb die Aufgabe zugrunde, eine Anordnung der oben genannten Artdahingehend zu verbessern, daßsie bei geringem Konstruktions- und Antriebsaufwand wirtschaftlich optimiert ist.

Die Aufgabe wird durch eine Anordnung mit den im kennzeichnenden Teil des Anspruchs 1 angegebenen Merkmalen gelöst.

Die Erfindung schließt den Gedanken ein, der Lagerung der Maschinengondel ohne Änderung des grundsätzlichen Aufbaus, insbesondere der bewährten Kugeldrehverbindung, mit geringem konstruktivem Aufwand ein zusätzliches Selbsthalte- bzw. - bremsvermögen einzuprägen. Speziell soll der Lagerung - in besonders einfacher Realisierung dieses Gedankens - ein zusätzliches Reibmoment verliehen werden.

Die Reibmittel umfassen erfindungsgemäß einen am Maschinenrahmen angebrachten federbelasteten Reibbelag und eine direkt auf der Oberfläche des Turmkopf-Lagerrings ausgebildete und auf dem Reibbelag ablaufende Gleitbahn.

Je nach spezieller Ausführung des Lagerringes kann der Reibbelag unmittelbar auf dessen Unter- oder Oberseite bzw. - bei Vorsehen zweier Reibbelagsschichten - auch auf beide wirken, oder es ist auf die Unter- und/oder Oberseite des Lagerringes eine zusätzliche Gleitbahn aufgebracht. Im letzteren Falle kann die Materialpaarung der Reibmittel unabhängig von der Ausführung der Lagerringe festgelegt und somit optimiert werden, die Herstellung ist aber natürlich aufwendiger. Das Vorsehen zweier, auf die Unter- und Oberseite eines Lagerringes wirkender Reibbeläge ist zwar ebenfalls aufwendiger als das Vorsehen nur eines Reibbelages bzw. einer Reibplattenspur, ermöglicht aber in lagerschonender Weise die Kompensation der Axialkraftkomponente.

Die Federbelastung des Reibbelages ist zur Anpassung an unterschiedliche, speziell auch an sich ändernde Betriebsbedingungen bevorzugt einstellbar.

Bei einer unaufwendig in bekannte Konstruktionen des Maschinenrahmens integrierbaren Ausführung kann der Reibbelag durch eine Mehrzahl voneinander beabstandeter, jeweils insbesondere über Tellerfederpakete gegen die Gleitbahn gepreßter Reibplatten gebildet werden. Anstelle von Tellerfederpaketen sind grundsätzlich auch entsprechend dimensionierte Schraubenfedem oder andere Federelemente, ggfs. auch Elastomerblöcke, einsetzbar.

Hierbei ist zweckmäßigerweise jeder einzelnen Reibplatte eine Druckschraube zur Einstellung ihrer Federbelastung zugeordnet, die Reibplatten sind von einem Federstempel oder Federtopf getragen, und der Federstempel oder Federtopf ist in einer Bohrung der Grundplatte oder der Tragplatte aufgenommen und vertikal geführt.

In einer sinnvollen konstruktiven Vereinfachung sind Halter (Halteplatten) für die Reibplatten einseitig durch die Drehkranzverschraubung der Grundplatte fixiert.

Alternativ zu den oben angesprochenen Anordnungen kann der Reibbelag auch radial nach innen oder außen gerichtet auf die Gleitbahn, insbesondere direkt auf die Oberfläche des Lagerringes, wirken. Bei Inkaufnahme des mit der Anbringung zweier Reibspuren bzw. Reibplattenanordnungen versehenen Aufwandes ist auch eine kombiniert radial nach innen und außen auf die Mantelflächen ringförmiger Gleitbahnen wirkende Anordnung möglich.

Bei einer Windkraftanlage im Leistungsbereich von einigen hundert kW bis etwa 2 MW, bei der die Maschinengondel auf einem ein- oder zweireihigen Großkugellager gelagert ist, wird das zusätzliche Reibmoment (beispielsweise durch entsprechendes Anziehen von Druckschrauben) auf einen Wert im Bereich von insgesamt 50 bis 700 kNm eingestellt werden. Bei einer solchen Anlage ist der Drehverbindung zwischen Maschinenträger und Turmkopf-Lagerring außerdem eine aktive Bremseinrichtung, speziell mit zwei oder mehreren Motor-Bremsen-Einheiten, mit einem konstruktiv vorbestimmten maximalen Bremsmoment im Bereich zwischen 100 und 2000 kNm zugeordnet. Eine solche Abstimmung zwischen passiver und aktiver Bremsvorrichtung ermöglicht eine hinsichtlich der Gondelsteuerung optimierte Betriebsführung.

Vorteilhafte Weiterbildungen der Erfindung sind im übrigen in den Unteransprüchen gekennzeichnet bzw. werden nachstehend zusammen mit der Beschreibung bevorzugter Ausführungen der Erfindung anhand der Figuren näher dargestellt. Es zeigen:
- Figur 1: eine schematische perspektivische Darstellung einer auf dem Turm einer Windkraftanlage montierten Maachinengondel,
- Figur 2: eine Draufsicht auf die Grundplatte der Maschinengondel nach Fig. 1 gemäß einer Ausführungsform der Erfindung,
- Figur 3a: eine Detail-Querschnittsdarstellung der Drehverbindung zwischen Turmkopf-Lagerring und Maschinenrahmen gemäß einer Ausführungsform und
- Figur 3b: eine Detail-Querschnittsdarstellung der Drehverbindung zwischen Turmkopf-Lagerring und Maschinenrahmen gemäß einer weiteren Ausführungsform.

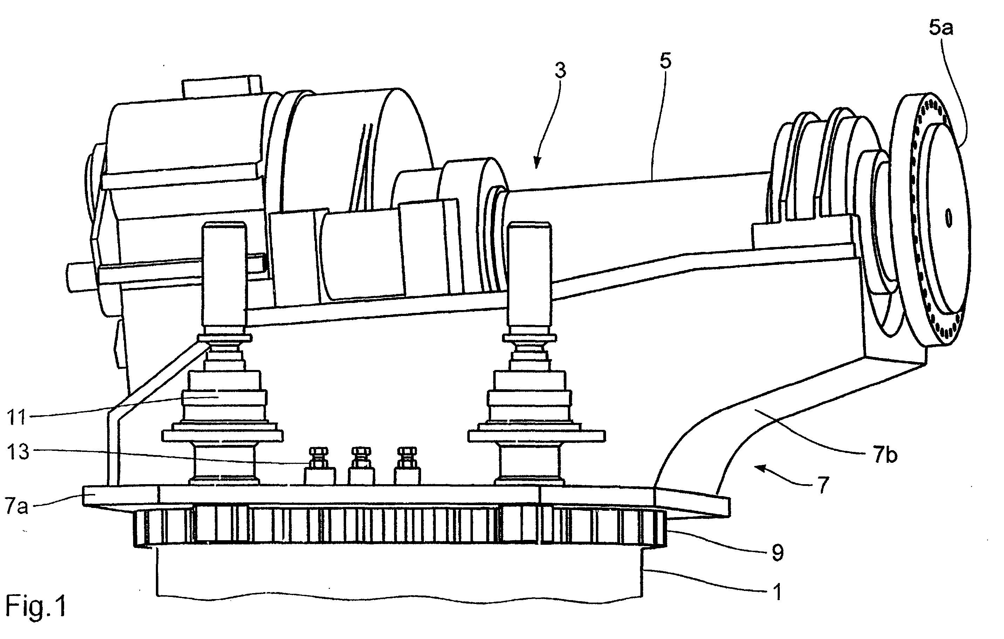

In Fig. 1 ist skizzenartig eins auf einem Turm 1 einer Windkraftanlage montierte Maschinengondel 3 gezeigt, von deren Maschinen-Komponenten hier nur die Rotorwelle 5 und die Rotornabe 5a einzeln bezeichnet sind. Die Tragstruktur der Maschinengondel 3 ist durch einen Maschinenrahmen 7 mit einer annähernd rechteckigen Grundplatte 7a und einer aufgeschweißten Maschinenhaiterung 7b gebildet. Den oberen Abschluß des Turmes 1 bildet ein Turmkopf-Lagerring 9 mit Außenverzahnung 9a, der koaxial als Außenlagerring einen (hier nicht zu erkennenden) gondelseitigen Innenlagerring eines Großwälzlagers unter dem Maschinenrahmen 7 umschließt. Die Details hierzu sind weiter unten genauer beschrieben.

Im Maschinenrahmen 7 sitzen vier als Antriebs- und Bremsmotoren dienende Elektromotoren 11 (von denen aus der Figuren-Perspektive zwei zu sehen sind), die über Ritzel 11a mit der Außenverzahnung 9a des Turmkopf-Lagerringes 9 im Eingriff stehen. Weiterhin sind auf dem Maschinenrahmen 7 drei Reibplattenhalter 13 zur Erzeugung eines zusätzlichen Bremsmomentes bei Verdrehungen der Maschinengondel 3 gegenüber dem Turm 1 zu erkennen; auch diese und deren genaue Funktionsweise sind weiter unten beschrieben.

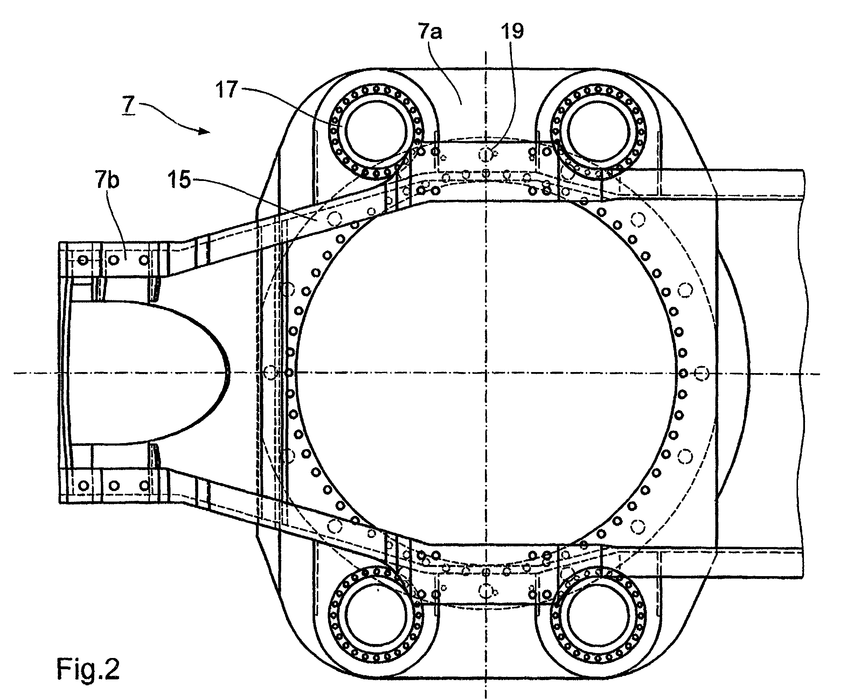

Fig. 2 zeigt in der Draufsicht den Maschinenrahmen 7 in der Ausführung nach Fig. 1. Die Grundplatte 7a ruht auf einem Lagerring 15 eines Großwälzlagers und ist aus dessen Gestalt entwickelt. Sie weist vier Flansche 17 zur Aufnahme der Motoren 11 (Fig. 1) auf. Weiter sind 16 Bohrungen 19 zur Aufnahme von Reibplattenhaltern vorgesehen, die um den Umfang des inneren Lagerringes 15 verteilt angeordnet sind.

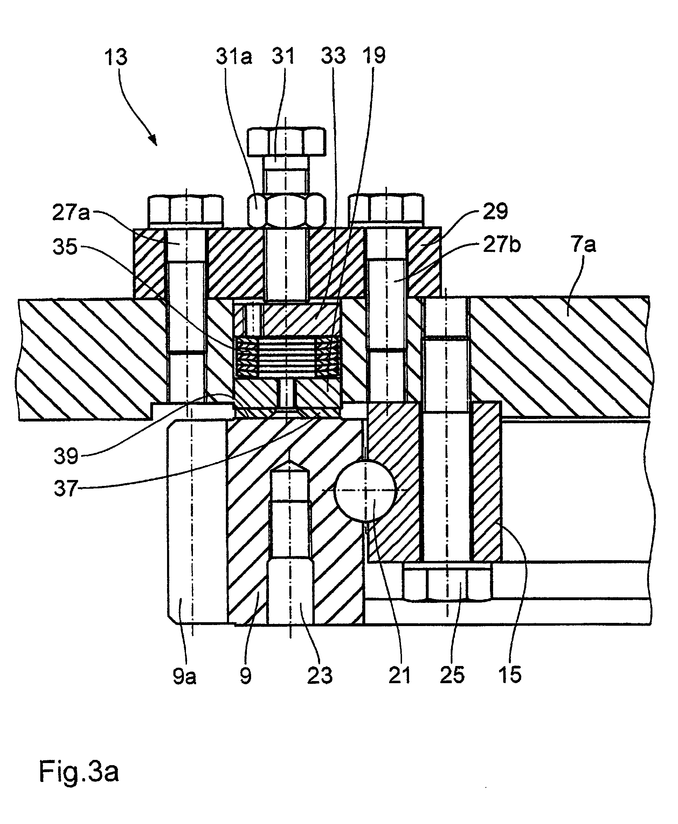

Fig. 3a zeigt in einer Detail-Querschnittsdarstellung der Drehverbindung zwischen dem Turmkopf-Lagerring 9 und dem Maschinenrahmen 7 die Ausführung eines auf die Grundplatte 7a aufgeschraubten Reibplattenhalters 13.

Der Turmkopf-Lagerring 9 bildet den äußeren Lagerring und der maschinengondelseitige Lagerring 15 den inneren Lagerring einer Kugeldrehverbindung bzw. eines Kugellagers, von dem in der Figur außerdem eine Kugel 21 gezeigt ist. Am Turmkopf-Lagerring ist eine Gewindebohrung 23 zur Aufnahme einer Gewindeschraube zur Verbindung mit dem (nicht gezeigten) Turmkopfflansch zu erkennen, und der innere Lagerring 15 ist über Gewindeschrauben 25 mit der Grundplatte 7a des Maschinenträgers verschraubt.

Über der Bohrung 19 ist koaxial zu dieser mit zwei Gewindeschrauben 27a, 27b eine Halteplatte 29 mit geeignetem Querschnitt auf die Grundplatte 7a aufgeschraubt. Die Halteplatte 29 weist eine zentrische Durchgangsbohrung auf, in die eine mit einer Feststellmutter 31a versehene Druck- bzw. Einstellschraube 31 eingeschraubt ist. Deren Ende stützt sich auf der oberen Stirnfläche eines Reibplattenstempels 33 ab, der ein Tellerfederpaket 35 und an seinem unteren Ende eine durch die Tellerfedern belastete Reibplatte 37 trägt. Die Reibplatte 37 liegt auf der als Gleitfläche geschliffenen oberen Stirnfläche 39 des Turmkopf-Lagerringes auf und wird durch das Tellerfederpaket 35 mit einer über die Einstellschraube 31 vorwählbaren Andruckkraft gegen diese vorgespannt.

Bei Drehung des Maschinenträgers gegenüber dem Turmkopf-Lagerring erzeugt die Reibplatte 37 durch ihre Reibung auf der Gleitfläche 39 somit ein vorbestimmtes, dem eingeprägten Drehmoment entgegenwirkendes Reibmoment. Die Reibkräfte bzw. -momente der einzelnen Reibplatten (siehe Fig. 2) addieren sich zu einem für eine optimale Betriebsführung erwünschten Wert.

Die Einzelverschraubung der Reibplattenhalter mitdem Maschinenträger ermöglicht in kostengünstiger Weise den Einsatz standardisierter Großwälzlager und zudem eine individuelle Einstellung der Vorspannung und ein leichtes Auswechseln der Reibplatten. Eine Vereinfachung des Aufbaus ist beim Einsatz zusmmenhängender Halteplatten für mehrere Bohrungen möglich.

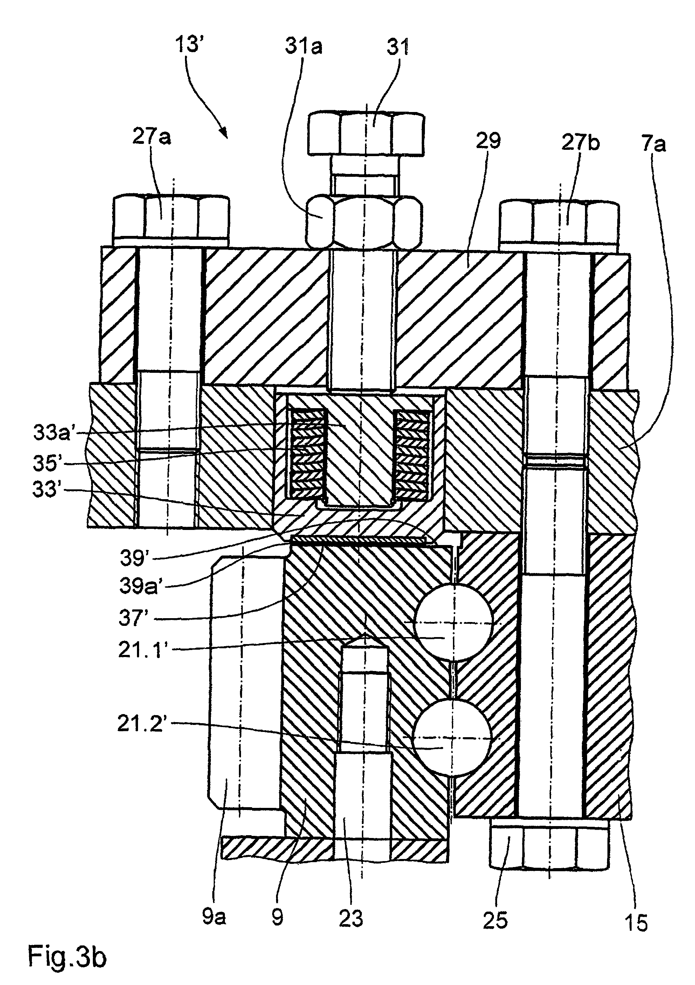

Fig. 3b zeigt in einer weiteren Detail-Querschnittsdarstellung eine weitere Ausführung eines auf die Grundplatte 7a aufgeschraubten Reibplattenhalters 13'. Die in dieser Figur gezeigten Komponenten entsprechen zum Teil den Komponenten der Anordnung aus Fig. 3a und sind insoweit mit entsprechenden Bezugsziffern bezeichnet und werden hier nicht nochmals erläutert.

Der Turmkopf-Lagerring 9 bildet auch hier den äußeren Lagerring und der maschinengondelseitige Lagerring 15 den inneren Lagerring einer Kugeldrehverbindung, die aber hier zweireihig ausgeführt ist und von der in der Figur je eine Kugel 21.1' bzw. 21.2' der ersten und zweiten Kugelreihe gezeigt ist.

Die Bohrung für den Gewindebolzen 27b zur Verschraubung der Halteplatte 29 mit der Grundplatte 7a ist hier koaxial mit der Bohrung für den Gewindebolzen 25 zur Verschraubung des Lagerringes 15 mit der Halteplate ausgeführt, so daO die Gewindebolzen 27b und 25 kürzer als bei der Anordnung nach Fig. 3a ausgeführt sind und von beiden Seiten in die entsprechende Bohrung der Grundplatte eingreifen.

In der Bohrung 19 ist (anstelle des Reibplattenstempels aus Fig. 3a) ein Federtopf 33' aufgenommen, der - geführt durch eine Passung in der Grundplatte - ein modifiziertes Tellerfederpaket 35' und auf seiner unteren Stirnfläche die durch die Tellerfedern belastete Reibplatte 37 trägt. Das Tellerfederpaket 35' wird seinerseits durch einen Führungsstempel 33a' geführt.

Die Reibplatte 37 aus einem speziellen Gleitmetall liegt hier auf einer Gleitbahn 39a' auf, die auf die obere Stirnfläche 39' des Turmkopf-Lagerringes zusätzlich aufgebracht ist.

Die Erfindung beschränkt sich in ihrer Ausführung nicht auf die vorstehend angegebenen bevorzugten Ausführungsbeispiele. Vielmehr ist eine Vielzahl von Varianten möglich, welche von der dargestellten Lösung auch in anders gearteter Ausführung Gebrauch machen.

So unterliegt die genaue Positionierung einzelner Reibplatten auf dem Maschinenträger in der Praxis bestimmten konstruktiven Limitierungen und wird in der Regel von der Prinzipdarstelung nach Fig. 2 abweichen. Auch die Anzahl und Form der Reibplatten und sie tragenden Halter ist natürlich in Abhängigkeit vom konkreten Anwendungsfall variierbar. Insbesondere ist auch die Anordnung der Verzahnung vertauschbar, so daß sich eine innenverzahnte Kugeldrehverbindung ergibt. Weiterhin ist die Erfindung auch bei einer Anlage mit turmfester Anordnung der Antriebe und gondelfester Verzahnung anewendbar.

## Patentansprüche

1. Anordnung zur drehbaren Lagerung der Maschinengondel (3) einer Windkraftanlage vom Horizontalrotor-Typ auf einem Turm (1), mit
- einem eine Drehverbindung zwischen dem Turm (1) und der Maschinengondel (3) herstellenden Großwälzlager (9, 15, 21;21.1', 21.2') und
- der Drehverbindung zugeordneten, ein zusätzliches Reibmoment erzeugenden, selbstnachstellenden, lösbaren Reibmitteln (13), die direkt auf die Oberfläche eines Lagerringes (9,15) des Großwälzlagers wirken,
**dadurch gekennzeichnet,**
- **dass** die Reibmittel (13) eine an einem Maschinenrahmen (7) der Maschinengondel (3) angebrachte federbelastete Reibfläche (37) und eine auf der Oberfläche des Turmkopf-Lagerringes (9) vorgesehene und auf der Relbfläche (37) ablaufende Gleitfläche (39;39a') aufweisen.

2. Anordnung nach Anspruch 1, **dadurch gekennzeichnet, dass** die Reibfläche (37) unmittelbar auf die Unter- und/oder Oberseite des Turmkopf-Lagerringes (9) wirkt.

3. Anordnung nach Anspruch 1 oder 2, **dadurch gekennzeichnet, dass** an dem Maschinenrahmen (7) eine Mehrzahl von voneinander beabstandeten, jeweils insbesondere über Tellerfederpakete (35;35') gegen die Gleitfläche (39;39a') gepressten Reibplatten (37) abnehmbar angebracht ist.

4. Anordnung nach einem der Ansprüche 1 bis 3, **dadurch gekennzeichnet, dass** die Federbelastung der Reibfläche (37) einstellbar ist.

5. Anordnung nach Anspruch 3 oder 4, **dadurch gekennzeichnet, dass** jeder Reibplatte (37) eine Druckschraube (31) zur Einstellung ihrer Federbelastung zugeordnet ist.

6. Anordnung nach einem der Ansprüche 3 bis 5, **dadurch gekennzeichnet, dass** jede Reibplatte (37) von einem Federstempel (33) oder Federtopf (33') getragen und der Federstempel oder Federtopf in einer Bohrung (19) des Maschinenrahmens (7) aufgenommen und vertikal geführt ist.

7. Anordnung nach einem der Ansprüche 3 bis 6, **dadurch gekennzeichnet, dass** Reibplattenhalter einseitig durch die Drehkranzverschraubung des Maschinenrahmens fixiert sind.

8. Anordnung nach einem der Ansprüche 1 oder 3 bis 7, **dadurch gekennzeichnet, dass** die Reibfläche radial nach innen und/oder außen gerichtet auf die Gleitfläche wirkt.

9. Anordnung nach einem der vorhergehenden Ansprüche, **dadurch gekennzeichnet, dass** das zusätzliche Reibmoment bei einer Anlage mit einer Leistung im Bereich zwischen 300 kW und 2 MW auf einen Gesamtwert im Bereich von 50 bis 700 kNm eingestellt ist.

10. Anordnung nach einem der vorgehenden Ansprüche, **dadurch gekennzeichnet, dass** das Großwälzlager als ein- oder zweireihiges Kugeloder Rollenlager (9, 15, 21;21.1', 21.2') ausgeführt ist.

11. Anordnung nach einem der vorhergehenden Ansprüche, **dadurch gekennzeichnet, dass** der Drehverbindung zwischen Turmkopf-Lagerring (9) und Maschinenrahmen (7) eine aktive Bremseinrichtung (11), insbesondere eine Elektromotor-Schelbenbremsen-Einheit, mit einem konstruktiv vorbestimmten maximalen Bremsmoment im Bereich zwischen 100 und 2000 kNm bei einer Anlage mit einer Leistung im Bereich zwischen 300 kW und 2 MW zugeordnet ist.

## Claims

1. Arrangement for rotatably supporting the machine nacelle (3) of a wind energy plant of the horizontal type on a tower (1), comprising:
- a large-size antifriction bearing (9,15,21;21.1',21.2') producing a rotary connection between the tower (1) and the machine nacelle (3), and
- self-adjusting detachable friction means (13) associated with the rotary connection and producing an additional friction moment, said friction means (13) acting directly upon the surface of a bearing ring (9,15) of the large-size antifriction bearing,
**characterized in that**
- the friction means (13) comprise a spring-loaded friction surface (37) attached to a machine frame (7) of the machine nacelle (3) and a sliding surface (39;39a') provided on the surface of the tower head bearing ring (9) and extending over the friction surface (37).

2. Arrangement according to claim 1, **characterized in that** the friction surface (37) acts directly upon the upper and/or lower side of the tower head bearing ring (9).

3. Arrangement according to claim 1 or 2, **characterized in that** a plurality of friction plates (37) disposed in a spaced relationship to each other and pressed in particular by disk spring assemblies (35;35') against the sliding surface (39;39a') are detachably attached to the machine frame (7).

4. Arrangement according to one of claims 1 to 3, **characterized in that** the spring loading of the friction surface (37) is adjustable.

5. Arrangement according to claim 3 or 4, **characterized in that** a pressure screw (31) for adjusting the spring loading of the friction plate is associated with each friction plate (37).

6. Arrangement according to one of claims 3 to 5, **characterized in that** each friction plate (37) is carried by a spring stamp (33) or a spring pot (33') and the spring stamp or spring pot is accommodated and vertically guided in a bore (19) of the machine frame (7).

7. Arrangement according to one of claims 3 to 6, **characterized in that** friction plate holders are fixed on one side by the slewing ring union of the machine frame.

8. Arrangement according to one of claims 1 or 3 to 7, **characterized in that** the friction surface acts radially in inside and/or outside direction upon the sliding surface.

9. Arrangement according to one of the preceding claims, **characterized in that** the additional friction moment is adjusted to a total value ranging from 50 to 700 kNm in a plant having a capacity ranging between 300 kW and 2 MW.

10. Arrangement according to one of the preceding claims, **characterized in that** the large-size antifriction bearing is configured as single-row or two-row ball bearing or roller bearing (9,15,21;21.1';21.2').

11. Arrangement according to one of the preceding claims, **characterized in that** an active braking means (11), in particular an electromotor/disk brake unit, having a constructionally predetermined maximum braking moment in the range between 100 and 2000 kNm is associated with the rotary connection between the tower head bearing ring (9) and the machine frame (7) in a plant having a capacity in the range between 300 kW and 2MW.

## Revendications

1. Agencement de montage en palier de rotation de la nacelle (3) d'une centrale éolienne de type à rotor horizontal sur une tour (1), comportant :
- un grand palier à roulement (9,15,21; 21.1',21.2') établissant une liaison de rotation entre la tour (1) et la nacelle (3), et
- des moyens de frottement (13) désolidarisables, à reprise de réglage automatique, produisant un couple de frottemcnt supplémentaire, associés à la liaison de rotation, les moyens de frottement agissant directement sur la surface d'une bague de palier (9,15) du grand palier à roulement,
**caractérisé en ce que**,
- les moyens de frottement (13) présentent une face de frottement (37) chargée par un ressort, montée sur un cadre de machine (7) de la nacelle (3), et une face de glissement (39; 39a'), prévue sur la surface de la bague de palier de tête de tour (9) et se déplaçant sur la face de frottement (37).

2. Agencement selon la revendication 1, **caractérisé en ce que** la face de frottement (37) agit directement sur la face inférieure et/ou supérieure de la bague de palier de tête de tour (9).

3. Agencement selon la revendication 1 ou 2, **caractérisé en ce que** sur le cadre de machine (7) sont montées de façon amovible une pluralité de plaques de frottement (37) espacées les unes des autres, pressées chacune contre la face de glissement (39; 39a'), en particulier par des paquets de ressort à disque ou rondelle Belleville (35; 35').

4. Agencement selon l'une des revendications 1 à 3, **caractérisé en ce que** la charge élastique de la face de frottement (37) est réglable.

5. Agencement selon la revendication 3 ou 4, **caractérisé en ce qu'**une vis de pressage (31) est associée à chaque plaque de frottement (37), pour régler sa charge élastique.

6. Agencement selon la revendication 3 à 5, **caractérisé en ce que** chaque plaque de frottement (37) est portée par un mandrin à ressort (33) ou un pot à ressort (33'), et le mandrin à ressort ou le pot à ressort est logé et guidé verticalement dans un perçage (19) du cadre de machine (7).

7. Dispositif selon l'une des revendications 3 à 6, **caractérisé en ce que** les supports de plaque de frottement sont fixés sur un côté par le dispositif de vissage de couronne rotative du cadre de machine.

8. Agencement selon l'une des revendications 1 ou 3 à 7, **caractérisé en ce que** la face de frottement agit sur la face de glissement, d'une façon orientée radialement vers l'intérieur et/ou vers l'extérieur.

9. Agencement selon l'une des revendications précédentes, **caractérisé en ce que** le couple de frottement supplémentaire, dans le cas d'une installation d'une puissance dans la fourchette comprise entre 300 kW et 2 MW, est réglé à une valeur globale dans la fourchette de 50 à 700 kNm.

10. Agencement selon l'une des revendications précédentes, **caractérisé en ce que** le grand palier à roulement est réalisé sous la forme de roulement à billes ou roulement à rouleaux (9,15,21; 21.1',21.2'), à une ou deux rangées de billes ou rouleaux.

11. Agencement selon l'une des revendications précédentes, **caractérisé en ce qu'**à la liaison rotative entre la bague de palier de tête de tour (9) et le cadre de machine (7) est associé un dispositif de freinage (11) actif, en particulier un ensemble moteur hydraulique- frein à disque, avec un couple de freinage maximal prédéterminé à la construction, dans la fourchette entre 100 et 2000 kNm, pour une installation d'un puissance dans la fourchette entre 300 kW et 2 MW.
